Europäisches Patentamt

European Patent Office

Office européen des brevets

(19)

(11) **EP 1 411 570 A2**

(12) **EUROPEAN PATENT APPLICATION**

(43) Date of publication:
**21.04.2004 Bulletin 2004/17**

(51) Int Cl.7: **H01M 8/02**, H01M 8/04

(21) Application number: **03023253.2**

(22) Date of filing: **14.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **16.10.2002 JP 2002301920**

(71) Applicant: **MATSUSHITA ELECTRIC INDUSTRIAL CO., LTD.**
**Kadoma-shi, Osaka 571-8501 (JP)**

(72) Inventors:
• **Hatoh, Kazuhito**
  **Osaka-shi Osaka 536-0015 (JP)**
• **Kusakabe, Hiroki**
  **Sakai-shi Osaka 590-0113 (JP)**
• **Ohara, Hideo**
  **Katano-shi Osaka 576-0016 (JP)**

(74) Representative: **Patentanwälte**
**Leinweber & Zimmermann**
**Rosental 7,**
**II Aufgang**
**80331 München (DE)**

(54) **Fuel cell and operation method thereof**

(57)    A fuel cell comprising stacked unit cells, each unit cell comprising: a hydrogen-ion conductive electrolyte; an anode and a cathode with the hydrogen-ion conductive electrolyte interposed therebetween; an anode-side conductive separator in contact with the anode; and a cathode-side conductive separator in contact with the cathode, wherein the anode-side conductive separator comprises fuel gas passage grooves, facing the anode, for supplying a fuel gas to the anode, the cathode-side conductive separator comprises oxidant gas passage grooves, facing the cathode, for supplying an oxidant gas to the cathode, and at least one of the fuel gas passage grooves (21b) and the oxidant gas passage grooves (21a) have an equivalent diameter of not smaller than 0.56 mm and not larger than 1.51 mm per each groove.

**EP 1 411 570 A2**

**Description**

BACKGROUND OF THE INVENTION

A fuel cell generates electric power and heat simultaneously by electrochemical reaction of a fuel gas containing hydrogen with an oxidant gas containing oxygen such as air. A fuel cell is typically constructed by: first forming a catalyst reaction layer mainly composed of an electron conductive carbon powder carrying a noble metal catalyst such as platinum on each surface of a polymer electrolyte membrane that selectively transports hydrogen ions; and then forming a gas diffusion layer of a material having both gas permeability and electronic conductivity, e.g. carbon paper and carbon cloth, on the outer surface of the catalyst reaction layer. An electrode comprises the combination of the catalyst reaction layer and the gas diffusion layer.

Next, in order to prevent leakage of the gases to be supplied and prevent mixing of the two kinds of gases, a sealing member or gasket is arranged on the periphery of the electrodes with the periphery of the polymer electrolyte membrane caught in the gap formed in the sealing member or gasket. The sealing member or gasket is assembled into a single part together with the electrodes and polymer electrolyte membrane in advance, to form a so-called "membrane-electrode assembly (MEA)". Outside the MEA conductive separators are disposed for mechanically securing the MEA and for electrically connecting adjacent MEAs in series. A side of the separator, which is in contact with the MEA, is provided with gas flow channels for supplying the fuel gas or the oxidant gas to the electrode and for removing a generated gas and excess gas. Although the gas flow channels and the separator can be provided separately, it is common that grooves are formed on the surface of each separator to serve as the gas flow channels.

In order to supply the gases to these grooves, it is necessary to branch pipes for supplying the gases, according to the number of separators that the fuel cell comprises, and to use piping jigs for connecting the end of the branch directly to the grooves in the separator. This jig is called an external manifold. There is the other type of manifold with a more simple structure than the external manifold, which is called an internal manifold. The internal manifold is configured such that through holes are formed in the separator having the gas flow channels, each of which being connected with an inlet or outlet of the gas flow channels and the gases are directly supplied from the through holes to the gas flow channels.

Since a fuel cell generates heat during operation, it is necessary to cool the fuel cell comprising stacked unit cells to be kept at favorable temperatures. In general, a cooling section for feeding cooling water is provided between separators for every one to three unit cells; however, it is often the case that cooling water flow channels are provided on the rear surface of some separators to serve as the cooling section. The MEAs and separators are alternately placed with the cooling section interposed therebetween to assemble a stack of 10 to 200 MEAs. Typically, this stack is sandwiched between a pair of end plates via current collecting plates and insulating plates and secured with clamping bolts from both sides, to constitute a common cell stack.

The cell stack was secured with the end plates so as to reduce contact electric resistance among the electrolyte membrane, electrode and separator, and further to ensure gas sealing properties of the sealing members or gasket; usually pressure of more than 10 kg/cm$^2$ is applied. Hence the ordinary practice is producing end plates of a metal material of excellent mechanical strength, and then securing the end plates by using the clamping bolts in combination with springs. Since a humidified gas and cooling water are in contact with part of the end plates, stainless steel plates, having more excellent corrosion resistance than other metal materials, are used for the end plates. As for the current collecting plate, on the other hand, a metal material with higher conductivity than carbon materials is used. From the standpoint of contact resistance, there are some cases where a surface-processed metal material is used. Because the pair of end plates is electrically connected via the clamping bolts, the insulating plate is inserted between the current collecting plate and the end plate.

A separator for use in such a fuel cell is required to have high electronic conductivity, gas-tightness and corrosion resistance (oxidation resistance). For this reason, a separator has been formed of a dense electronic conductive carbon plate having no gas permeability, with the surface thereof provided with gas passage grooves by means of cutting, or a molded material obtained by molding a mixture of a binder and a carbon powder and then baking it.

In recent years, there has been an attempt to use a metal plate such as stainless steel for a separator in place of the carbon materials. A separator made of a metal plate may corrode when exposed to an oxidation atmosphere at high temperatures or used for a long period of time. The corrosion of a metal plate leads to an increase in electrical resistance and a decrease in output efficiency of the cell. Further, dissolved metal ions diffuse in a polymer electrolyte and are then trapped in the exchange site thereof, resulting in lowering of ion conductivity of the polymer electrolyte itself. With the aim of avoiding such deterioration, the surface of a metal plate is plated with gold to a sufficient degree.

Conventionally, a material made of perfluorocarbon sulfonic acid has been in primary use as a polymer electrolyte. Since this polymer electrolyte exhibits ion conductivity while containing water therein, it is necessary to humidify a fuel gas and an oxidant gas before the supplies thereof to MEAs. Further, since water is created by a reaction on the cathode side, when the gas is humidified at a dew point higher than a cell operation temperature, water concentration may occur in the gas flow channels inside the cell and inside the electrode. This induces such a phenomenon as water clogging, raising a problem of unstable or deteriorated cell performance. This phenomenon is called the flooding phenomenon.

Moreover, when a fuel cell is used as an automatic power generation system in residential homes, humidification of the fuel gas and the oxidant gas needs to be systemized, and it is preferable that the humidification is performed at as low a dew point as possible so as to simplify the system and increase efficiency of the system. Hence it is an ordinary practice to humidify the gas at a dew point a little lower than a fuel cell temperature before the supply thereof to the fuel cell, from the standpoint of preventing the flooding phenomenon, simplifying the system, increasing efficiency of the system, and the like.

For enhancing cell performance, on the other hand, there is required improvement in ion conductivity of a polymer electrolyte membrane. On that account, it is preferable that a gas is humidified to almost 100% or not less than 100% in relative humidity. It is also preferable with view to the durability of a polymer electrolyte membrane that a gas in a highly humidified state is supplied. However, various problems may occur when the gas is humidified to almost a relative humidity of 100%, as described below.

A first problem relates to the aforesaid flooding phenomenon. There can be considered two measures for preventing the flooding phenomenon: preventing clogging of condensed water in gas passage grooves; and preventing clogging of condensed water inside the electrode, and the former measure is considered as more effective. A method of increasing pressure loss of the gas so as to blow off the condensed water can be considered. However, the increase in pressure loss of the gas causes an extreme increase in auxiliary motive energy of the fuel cell system such as a gas supply blower and a compressor, thereby bringing about lowering of the system efficiency.

A second problem is that variations with time in water wetting properties (contact angle) of an electrode (a gas diffusion layer and the carrier carbon of a catalyst reaction layer) induce deterioration in discharging properties of condensed water with time, exerting an effect on the durability of the cell.

A third problem is that variations with time in water wetting properties of the electrode cause variations with time as regards the ratio of a flow rate of a gas flowing in the gas diffusion layer to a flow rate of a gas flowing along gas flow channels in the separator. Specifically, when wetting properties of the gas diffusion layer increase with time and an amount of condensed water clogging in the gas diffusion layer increases with time, the gas supply to the electrode becomes stagnant in some portion. In the portion where the gas supply is stagnant, a current density decreases. This makes a current density on the electrode surface nonuniform, resulting in deterioration of output power for cell performance.

A forth problem is that variations with time in water wetting properties of the electrode lead to variations with time in amount of the underflow gas between the flow channels in the separator. Without the gas diffusion layer, a gas supplied into the gas flow channels would certainly flow along the gas flow channels. In practice, however, there exists a gas diffusion layer adjacent to the gas flow channels and thus the underflow gas flows between the mutually adjacent flow channels via the gas diffusion layer (e.g. over ribs between the gas passage grooves).

In the case of gas flow channels that travel in a serpentine line extending from the upstream toward the downstream and comprise a plurality of mutually parallel horizontal parts, for example, the gas flows in the reverse direction in some of the two adjacent horizontal parts. It is therefore considered that pressure loss of the gas flowing along the gas flow channels and pressure loss of the underflow gas flowing from the upstream part toward the downstream part via the gas diffusion layer are balanced.

When wetting properties of the gas diffusion layer increase with time and the amount of condensed water in the gas diffusion layer increases with time, however, the underflow of the gas via the gas diffusion layer becomes stagnant. Naturally, the smaller the pressure loss of the gas flowing from the upstream part toward the downstream part via the gas diffusion layer, the more often this phenomenon may occur. In the case of the gas flow channels traveling in a serpentine line, an amount of the underflow gas flowing via the gas diffusion layer, particularly in the vicinity of bends of the gas flow channels, decreases with time, and thereby the gas supply tends to become stagnant. In a portion of the gas diffusion layer in which the gas supply is stagnant, a current density decreases to cause nonuniformity of the current density within the cell surface, resulting in deterioration of cell performance.

There can be considered two measures for preventing the flooding phenomenon: preventing clogging of condensed water in gas passage grooves; and preventing clogging of condensed water inside the electrode. Considered as more effective is not to allow flooding of condensed water in gas passage grooves. To that end, it is basically effective to increase pressure loss of a gas to be supplied to gas passage grooves; however, supplying a gas with pressure loss as high as over about 30 kPa is not realistic.

It should be noted that for the purpose of improving output power, efficiency, stability and the like of fuel cells, there has been made a variety of studies on optimization of structures of gas passage grooves (e.g. Japanese Laid-Open Patent Publication No. Hei 6-267564, Japanese Laid-Open Patent Publication No. Hei 8-203546, Japanese Laid-Open Patent Publication No. 2000-231929, Japanese. Laid-Open Patent Publication No. 2001-52723, Japanese Laid-Open Patent Publication No. 2001-76746).

BRIEF SUMMARY OF THE INVENTION

The present invention relates to a fuel cell comprising a hydrogen-ion conductive electrolyte to be used for portable power sources, electric vehicle power sources, cogeneration systems or the like, and particularly relates to a fuel cell using a hydrogen-ion conductive polymer electrolyte membrane, as well as to a method of operating the same.

According to the invention, the above object is achieved by a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said fuel gas passage groove and/or said oxidant gas passage groove has/have an equivalent diameter of not less than 0.56 mm, preferably not less than 0.67 mm and not more than 1.51 mm.

Preferably said fuel gas passage groove and/or said oxidant gas passage groove has/have an equivalent diameter of 0.79 mm to 1.3 mm, preferably 1 mm to 1.2 mm.

Moreover, the invention provides a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said fuel gas passage groove and /or said oxidant gas passage groove has/have a depth of not more than 1.2 mm, and not less than 0.5 mm.

Preferably said fuel gas passage groove and/or said oxidant gas passage groove has/have a depth of 0.7 mm to 1.1 mm.

Furthermore, the invention provides a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said fuel gas passage groove and/or said oxidant gas passage groove travel(s) in a serpentine line extending from the upstream toward the downstream, and comprise(s) a plurality of horizontal parts which are mutually parallel and substantially have the same length "a", and a ratio of said length "a" to the shortest linear dimension "b", between the most-upstream-side horizontal part among said plurality of horizontal parts and the most-downstream horizontal part among the same, satisfies $a/b \leq 1.2$, preferably $0.3 \leq a/b \leq 1.2$.

According to a further aspect of the invention, what is provided is a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said fuel gas passage groove and/or said oxidant gas passage groove travel(s) in a serpentine line extending from the upstream toward the downstream, and comprise(s) a plurality of horizontal parts which are mutually parallel and substantially have the same length "a", and a ratio of a width "c" of ribs between said mutually adjacent horizontal parts to said length "a" satisfies $1/200 \leq c/a \leq 1/20$.

Another solution according to the invention is a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said anode and/or said cathode comprise(s) a gas diffusion layer having a thickness of 100 to 400 $\mu$m.

Another aspect of the invention refers to a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said anode and/or said cathode comprise(s) a gas diffusion layer having a gas permeability in a direction parallel to the major surface thereof, on the basis of a dry gas, of $2 \cdot 10^{-8}$ to $2 \cdot 10^{-6}$ $m^2/(Pa \cdot sec)$ .

The invention, furthermore, refers to a fuel cell, comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said fuel gas passage groove and/or said oxidant gas passage groove has/have a width of less than 1.5 mm and of 0.3 mm or more, preferably 0.5 mm or more.

The invention also covers a stack of at least 2 fuel cells as described above.

According to a further aspect of the invention, what is provided is a method for operating a fuel cell comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein at least one of a fuel gas flowing along said fuel gas passage groove and an oxidant gas flowing along said oxidant gas passage groove has an inlet pressure loss of not smaller than 1.5 kPa and not larger than 25kPa.

Furthermore, the invention provides a method for operating a fuel cell, said fuel cell comprising an anode and a cathode, an anode-side separator with at least one fuel gas passage groove, facing said anode, for supplying a fuel gas to said anode, and a cathode-side separator' with at least one oxidant gas passage groove, facing said cathode, for supplying an oxidant gas to said cathode, wherein a ratio of a flow rate "f" of an underflow gas flowing in said anode to a flow rate "e" of a fuel gas flowing along said fuel gas passage groove satisfies $0.05 \leq f/e \leq 0.43$.

Moreover, the invention provides a method for operating fuel cell, said fuel cell comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein a ratio of a flow rate "h" of an underflow gas flowing in said cathode to a flow rate "g" of an oxidant gas flowing along said oxidant gas passage groove satisfies $0.05 \leq h/g \leq 0.43$.

Finally, the invention provides a method for operating a fuel cell, said fuel cell comprising an anode and a cathode, an anode-side separator with at least one fuel gas passage groove, facing said anode, for supplying a fuel gas to said anode, and a cathode-side separator with at least one oxidant gas passage groove, facing said cathode, for supplying an oxidant gas to said cathode, wherein said method comprises at least one of the following features:

a) the fuel cell is provided with at least one cooling medium passage groove, wherein a temperature of the inlet of a cooling medium is 45 to 75° C, preferably 50 to 70° C.,
b) a utilization rate of the oxidant gas is not lower than 30% and not higher than 70%, and
c) a power generation current density of said fuel cell is not lower than 0.05 A/cm$^2$ and not higher than 0.3 A/cm$^2$.

Preferably a dew point of at least one of the fuel gas and oxidant gas to be supplied to said fuel cell is not lower than -5° C and not higher than + 5 ° C relative to said inlet temperature.

In other words, specifically, the present invention is presented in view of what was described above and relates to a fuel cell comprising a stack of unit cells, each unit cell comprising: an anode and a cathode with a hydrogen-ion conductive electrolyte interposed therebetween; an anode-side conductive separator in contact with the anode; and a cathode-side conductive separator in contact with the cathode, wherein the anode-side conductive separator comprises fuel gas passage grooves, facing the anode, for supplying a fuel gas to the anode, the cathode-side conductive separator comprises oxidant gas passage grooves, facing the cathode, for supplying an oxidant gas to the cathode, and at least one of the fuel gas passage grooves and the oxidant gas passage grooves have an equivalent diameter of not smaller than 0.79 mm and not larger than 1.3 mm per each groove.

It is preferable that at least one of the fuel gas passage grooves and the oxidant gas passage grooves have a depth of not less than 0.7 mm and not more than 1.1 mm.

It is preferable that at least one of the fuel gas passage grooves and the oxidant gas passage grooves travel in a serpentine line extending from the upstream toward the downstream, and comprise a plurality of horizontal parts which are mutually parallel and substantially have the same length "a", and a ratio of the length "a" to the shortest linear dimension "b", between the most-upstream-side horizontal part among the plurality of horizontal parts and the most-downstream horizontal part among the same, satisfies $a/b \leq 1.2$.

It is preferable that at least one of the fuel gas passage grooves and the oxidant gas passage grooves travel in a serpentine line extending from the upstream toward the downstream, and comprise a plurality of horizontal parts which are mutually parallel and substantially have the same length "a", and a ratio of a width "c" of ribs between the mutually adjacent horizontal parts to the length "a" satisfies $1/200 \leq c/a \leq 1/20$.

It is preferable that each of the anode and cathode comprises a gas diffusion layer and a catalyst reaction layer in contact with the gas diffusion layer, and at least one of the gas diffusion layers of the anode and cathode has a thickness of 100 to 400 $\mu$m.

It is preferable that at least one of the gas diffusion layers of the anode and cathode has a gas permeability in a direction parallel to the surface thereof, on the basis of a dry gas, of $2 \times 10^{-8}$ to $2 \times 10^{-6}$ m$^2$/(Pa •sec).

It is preferable that the fuel cell is operated on condition that at least one of a fuel gas flowing along the fuel gas passage grooves and an oxidant gas flowing along the oxidant gas passage grooves has a pressure loss of not smaller than 1.5 kPa (1 kPa = 100 mmAq) and not larger than 25 kPa.

It is preferable that the fuel cell is operated on condition that a ratio of a flow rate "f" of an underflow gas flowing in the anode to a flow rate "e" of a fuel gas flowing along the fuel gas passage grooves satisfies $0.05 \leq f/e \leq 0.43$.

It is preferable that the fuel cell is operated on condition that a ratio of a flow rate "f" of an underflow gas flowing in the cathode to a flow rate "e" of an oxidant gas flowing along the oxidant gas passage grooves satisfies $0.05 \leq f/e \leq 0.43$.

When the fuel cell further comprises cooling medium passage grooves, it is preferable that the fuel cell is operated on condition that a temperature of the inlet of the cooling medium passage grooves is 45 to 75 °C, a dew point of at least one of the fuel gas and oxidant gas to be supplied to the fuel cell is not lower than -5°C and not higher than +5°C relative to the inlet temperature, a utilization rate of the oxidant gas is not lower than 30% and not higher than 70%, and a power generation current density of the fuel cell is not lower than 0.05 A/cm$^2$ and not higher than 0.3 A/cm$^2$.

Underflow gas here means a gas flowing in the gas diffusion layer from the upstream toward the downstream of the gas flow channels in a direction parallel to the surface of the electrode.

According to the present invention, it is possible to solve or suppress the aforesaid problems that may occur when a fuel gas or an oxidant gas humidified to almost 100% or not less than 100% in relative humidity is supplied to a fuel cell, without supplying the gases with large pressure loss.

While the novel features of the invention are set forth particularly in the appended claims,'the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

FIG. 1 is a sectional view showing a configuration of a MEA in accordance with an example of the present invention.

FIG. 2 is a front view showing a structure of oxidant gas passage grooves in a separator used in EXAMPLE 1 and each EXPERIMENTAL EXAMPLE of the present invention.

FIG. 3 is a rear view showing a structure of fuel gas passage grooves in the separator of FIG. 2.

FIG. 4 is a rear view showing a structure of cooling water passage grooves in another separator of FIG. 2.

FIG. 5 is a front view showing a structure of oxidant gas passage grooves in a separator used for a fuel cell of EXAMPLE 8 of the present invention.

FIG. 6 is a rear view showing a structure of fuel gas passage grooves in the separator of FIG. 5.

DETAILED DESCRIPTION OF THE INVENTION

In case that condensed water and a gas flow along gas passage grooves, it is considered that a contact angle between the wall surface of the gas passage groove and the water, surface tension, and an equivalent diameter of the gas passage grooves exert great effects on flooding of the water. Especially when carbon is used as a material constituting the wall surface of the gas passage grooves, the contact angle between the carbon and the water is limited, and thereby the equivalent diameter of the gas passage grooves has a great effect on the water flooding. It is to be noted that an equivalent diameter means a diameter of an equivalent circle having the same area as a cross sectional area of a groove space.

The equivalent diameter of the gas passage grooves is calculated by the following formula, using a groove depth and a groove width:

$$\text{Equivalent diameter} = 2 \times (\text{groove depth} \times \text{groove width} / \pi)^{1/2}.$$

Further, when a taper is provided in the gas passage grooves and/or some degree of curvature or chamfering is present in the edge parts, the equivalent diameter can be determined from a cross sectional area of a space surrounded by a plane including the top face of the rib and the groove wall surface.

Moreover, when a taper is provided in the gas passage grooves and/or some degree of curvature or chamfering is present in the edge parts, a groove width is determined at the middle point of the line representing the shortest linear dimension between a plane including the top face of the rib and the groove bottom surface.

The equivalent diameter of the grooves is not smaller than 0.79 mm and not larger than 1.3 mm, and desirably not smaller than 1 mm and not larger than 1.2 mm. When the equivalent diameter of the grooves is smaller than 0.79 mm, extremely large pressure loss is required for discharge of the condensed water; when it exceeds 1.3 mm, the gap between the electrode and the separator becomes wider to increase contact resistance.

In order to effectively prevent' the water flooding in the gas passage grooves while maintaining cell performance, it is desirable that the groove depth is not less than 0.7 mm and not more than 1.1 mm. When the groove depth is less than 0.7 mm, extremely large pressure is required for the discharge of the condensed water; when it exceeds 1.1 mm, a separator needs a greater thickness and thus makes the volume efficiency of the cell stack unrealistic. On the other hand, the gas passage grooves preferably have a width of less than 1.5 mm. With the groove width not less than 1.5 mm, the cell characteristics tend to deteriorate. If, however, the width is too small, particularly with view to curves and bendings of the grooves, a pressure loss at an inlet of the groove must increase. The relationship between said pressure loss and said groove width is not linear and depends on the input gas rate ($cm^3$/s), the temperature of the cell and the humidification rate. However, a minimum value of the groove width of 0.3 mm turned out to be advantageous. A minimum value of 0.5 mm is preferred.

It is to be noted that when the equivalent diameter of the gas passage grooves is not smaller than 0.79 mm, with the pressure loss not smaller than 1.5 kPa, nearly all the water can be prevented from flooding in the gas passage grooves. However, even with the pressure loss not smaller than 1.5 kPa, when an equivalent diameter per each groove is smaller than 0.79 mm, the water flooding is prone to occur. Further, even with the equivalent diameter not smaller than 0.79 mm, when the groove width is long and the groove depth is as little as below 0.7 mm, the water flooding occurs on rare occasion.

In a fuel cell in a preferable mode of the present invention, at least one of fuel gas passage grooves formed in an anode-side conductive separator and oxidant gas passage grooves formed in a cathode-side conductive separator travel in a serpentine line extending from the upstream toward the downstream. The grooves comprise a plurality of horizontal parts which are mutually parallel and substantially have the same length "a".

Herein, variations with time in water wetting properties of the electrode lead to variations with time in flooding state of condensed water. For suppressing this, it is desirable to shorten the plurality of horizontal parts of the gas passage grooves, lengthen the shortest linear dimension "b" between the most-upstream-side horizontal part and the most-downstream horizontal part, and widen the ribs between the mutually adjacent horizontal parts. However, in the case of the gas passage grooves traveling in a serpentine line, when the horizontal parts are too short, the number of bends increases to allow the flow channels to maintain a certain length, thereby causing an increase in pressure loss of the gas. Further, when the ribs between the mutually adjacent horizontal parts are too wide, parts of the gas diffusion layer are pressed by the ribs to prevent the gas from being supplied to the pressed parts. It is thus necessary to design grooves in such a manner that the length of the horizontal parts and the number of the bends fall within the appropriate ranges.

What is to be noted in a state in which condensed water is flooding is that the larger the equivalent diameter of the flow channels, the more smoothly the water is discharged. With an increase in flow rate of the gas underflowing in the gas diffusion layer, discharging properties of the water deteriorate. When the ribs are widened, the discharging properties of the water improve due to suppression of the underflow gas.

Due to the above, in a first preferable mode of the present invention, grooves are designed such that a ratio of the length "a" to the shortest linear dimension "b" between the most-upstream-side horizontal part and the most-downstream horizontal part satisfies $a/b \leq 1.2$. Further, in a second preferable mode of the present invention, grooves are designed such that a ratio of a width "c" of ribs between the mutually adjacent horizontal parts to the length "a" satisfies $1/200 \leq c/a \leq 1/20$. Herein, when the ratio "a/b" exceeds 1.2, the horizontal parts become so long as to cause an increase in pressure loss of the horizontal parts between the bends, and thereby the amount of the underflow gas relatively increases. Further, when the horizontal parts become too short, the number of the bends excessively increases, and hence it is preferable that the ratio preferably satisfies $0.3 \leq a/b \leq 1.2$. When the ratio "c/a" falls below 1/200, the number of the bends increases to cause an increase in pressure loss of the gas; when the ratio "c/a" exceeds 1/20, the gas supply to the gas diffusion layer becomes insufficient.

Variations with time in water flooding inside the electrode and in wetting properties of the electrode are mostly controlled by the water flooding inside the gas diffusion layer. The gas diffusion layer preferably has a relatively large gas permeability and a thickness as small as possible. Since the gas diffusion layer simultaneously has a current collecting effect of the electrode, however, such a thin gas diffusion layer (less than 100 $\mu$m) as to impair conductivity in a direction parallel to the surface thereof causes deterioration of cell characteristics. Further, when the gas diffusion layer has a thickness over 400 $\mu$m, water discharge properties thereof deteriorate while an amount of the underflow gas in the layer excessively increases. It is therefore preferable that the gas diffusion layer has a thickness of 100 to 400 $\mu$m. It is also preferable that the gas diffusion layer pressed by the ribs of the separator has a thickness of 100 to 250 $\mu$m. It is further preferable that the gas permeability in a direction parallel to the major surface of the gas diffusion layer, on the basis of a dry gas, is $2 \times 10^{-8}$ to $2 \times 10^{-6}$ m$^2$/(Pa $\cdot$sec). When the gas permeability exceeds $2 \times 10^{-6}$ m$^2$/(Pa $\cdot$ sec), an amount of the underflow gas inside the gas diffusion layer overly increases; when it is lower than $2 \times 10^{-8}$ m$^2$/(Pa $\cdot$ sec), there is a tendency that the gas supply to the catalyst layer of the electrode is inhibited.

With respect to the relationship between a flow rate (f) of the underflow gas flowing in the gas diffusion layer and a flow rate (e) of the gas flowing along the gas passage grooves, it is preferable that the flow rate of the gas flowing along the gas passage grooves is 'dominant. In order to maintain the favorable relationship between these two flow rates, the ratio preferably satisfies $0.05 \leq f/e \leq 0.43$. When f/e falls below 0.05, the gas supply to the catalyst layer of the electrode tends to be inhibited; when it exceeds 0.43, the amount of the underflow gas inside the gas diffusion layer overly increases.

EXPERIMENTAL EXAMPLE 1

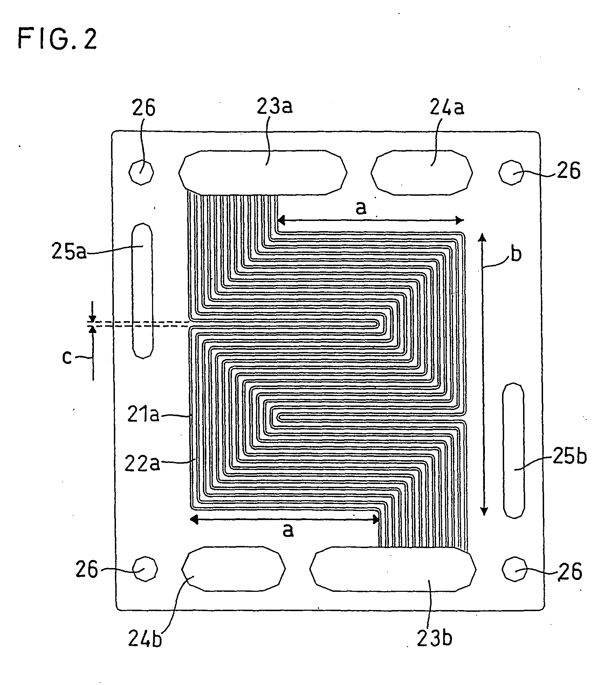

An electron conductive separator was produced by forming gas passage grooves by cutting in the surface of a dense electron conductive carbon plate with no gas permeability. An equivalent diameter of the grooves, calculated from a groove width, a groove depth and a groove cross sectional area, was used as a parameter to be varied for producing a variety of trial separators. It is to be noted that the shape of the gas flow channels was almost the same as shown in FIG. 2 of EXAMPLE 1, except that the groove width and the like were varied.

The groove width was not shorter than 0.5 mm because of difficulty in making it shorter than 0.5 mm in consideration of the cutting process. Further, the groove width was varied in the range of 0.5 to 1.5 mm as it was confirmed that the fuel cell performance deteriorated with the groove width being longer than 1.5 mm.

The groove depth was not more than 1.2 mm as it was confirmed that when the groove depth was longer than 1.2 mm, the separator became thicker, which was impractical and further caused deterioration in fuel cell performance.

Next, a gasket was provided on the periphery of each trial separator, and a transparent acrylic plate was placed on the separator surface such that the state of the gas flow along the gas passage grooves could be observed. Water drops were uniformly added into the gas passage grooves in the separator. A nitrogen gas or an air was then injected into the gas passage grooves with pressure loss of 1 kPa (100 mmAq), 1.5 kPa (150 mmAq), 2 kPa (200 mmAq), 5 kPa (500 mmAq) or 10 kPa (1000 mmAq). Thereafter, it was confirmed by visual observation whether or not swift removal of the water drops from the gas passage grooves was possible. The results are shown in Tables 1 to 7.

Table 1

| Equivalent Diameter (mm) | 0.56 | | 0.67 | | 0.80 | | 0.87 | | 0.98 | |
|---|---|---|---|---|---|---|---|---|---|---|
| Width/depth (mm) | Width 0.5 | Depth 0.5 | Width 0.7 | Depth 0.5 | Width 1.0 | Depth 0.5 | Width 1.2 | Depth 0.5 | Width 1.5 | Depth 0.5 |
| 100mmAq | × | | × | | × | | × | | × | |
| 150mmAq | × | | × | | × | | × | | × | |
| 200mmAq | × | | × | | × | | × | | × | |
| 500mmAq | × | | × | | × | | △ | | ○ | |
| 1000mmAq | × | | × | | △ | | ○ | | ○ | |

×: water drops flooded.

△: water drops were removed when taking time.

○: water drops were swiftly removed.

Table 2

| Equivalent Diameter (mm) | 0.62 | | 0.73 | | 0.87 | | 0.96 | | 1.07 | |
|---|---|---|---|---|---|---|---|---|---|---|
| Width/depth (mm) | Width 0.5 | Depth 0.6 | Width 0.7 | Depth 0.6 | Width 1.0 | Depth 0.6 | Width 1.2 | Depth 0.6 | Width 1.5 | Depth 0.6 |
| 100mmAq | × | | × | | × | | × | | × | |
| 150mmAq | × | | × | | × | | × | | Δ | |
| 200mmAq | × | | × | | × | | Δ | | Δ | |
| 500mmAq | × | | × | | Δ | | ○ | | ○ | |
| 1000mmAq | Δ | | Δ | | ○ | | ○ | | ○ | |

×: water drops flooded.

Δ: water drops were removed when taking time.

○: water drops were swiftly removed.

Table 3

| Equivalent Diameter (mm) | 0.67 | | 0.79 | | 0.94 | | 1.03 | | 1.16 | |
|---|---|---|---|---|---|---|---|---|---|---|
| Width/depth (mm) | Width 0.5 | Depth 0.7 | Width 0.7 | Depth 0.7 | Width 1.0 | Depth 0.7 | Width 1.2 | Depth 0.7 | Width 1.5 | Depth 0.7 |
| 100mmAq | × | | × | | × | | × | | × | |
| 150mmAq | × | | ○ | | ○ | | ○ | | ○ | |

| 200mmAq | Δ | ○ | ○ | ○ | ○ |
| 500mmAq | Δ | ○ | ○ | ○ | ○ |
| 1000mmAq | ○ | ○ | ○ | ○ | ○ |

×: water drops flooded.

Δ: water drops were removed when taking time.

○: water drops were swiftly removed.

Table 4

| Equivalent Diameter (mm) | 0.71 | | 0.84 | | 1.01 | | 1.11 | | 1.24 | |
|---|---|---|---|---|---|---|---|---|---|---|
| Width/depth (mm) | Width 0.5 | Depth 0.8 | Width 0.7 | Depth 0.8 | Width 1.0 | Depth 0.8 | Width 1.2 | Depth 0.8 | Width 1.5 | Depth 0.8 |
| 100mmAq | × | | × | | × | | × | | × | |
| 150mmAq | × | | ○ | | ○ | | ○ | | ○ | |
| 200mmAq | Δ | | ○ | | ○ | | ○ | | ○ | |
| 500mmAq | Δ | | ○ | | ○ | | ○ | | ○ | |
| 1000mmAq | ○ | | ○ | | ○ | | ○ | | ○ | |

×: water drops flooded.

Δ: water drops were removed when taking time.

○: water drops were swiftly removed.

Table 5

| Equivalent Diameter (mm) | 0.80 | | 0.94 | | 1.13 | | 1.24 | | 1.38 | |
|---|---|---|---|---|---|---|---|---|---|---|
| Width/depth (mm) | Width 0.5 | Depth 1.0 | Width 0.7 | Depth 1.0 | Width 1.0 | Depth 1.0 | Width 1.2 | Depth 1.0 | Width 1.5 | Depth 1.0 |
| 100mmAq | × | | × | | × | | × | | Δ | |
| 150mmAq | ○ | | ○ | | ○ | | ○ | | ○ | |
| 200mmAq | ○ | | ○ | | ○ | | ○ | | ○ | |
| 500mmAq | ○ | | ○ | | ○ | | ○ | | ○ | |
| 1000mmAq | ○ | | ○ | | ○ | | ○ | | ○ | |

×: water drops flooded.

Δ: water drops were removed when taking time.

○: water drops were swiftly removed.

Table 6

| Equivalent Diameter (mm) | 0.83 | | 0.99 | | 1.18 | | 1.30 | | 1.45 | |
|---|---|---|---|---|---|---|---|---|---|---|
| Width/depth (mm) | Width 0.5 | Depth 1.1 | Width 0.7 | Depth 1.1 | Width 1.0 | Depth 1.1 | Width 1.2 | Depth 1.1 | Width 1.5 | Depth 1.1 |
| 100mmAq | × | | × | | × | | × | | Δ | |
| 150mmAq | ○ | | ○ | | ○ | | ○ | | ○ | |

| 200mmAq | o | o | o | o | o |
|---|---|---|---|---|---|
| 500mmAq | Δ | o | o | o | o |
| 1000mmAq | o | o | o | o | o |

×: water drops flooded.

Δ: water drops were removed when taking time.

o: water drops were swiftly removed.

Table 7

| Equivalent Diameter (mm) | 0.87 | | 1.03 | | 1.24 | | 1.35 | | 1.51 | |
|---|---|---|---|---|---|---|---|---|---|---|
| Width/depth (mm) | Width 0.5 | Depth 1.2 | Width 0.7 | Depth 1.2 | Width 1.0 | Depth 1.2 | Width 1.2 | Depth 1.2 | Width 1.5 | Depth 1.2 |
| 100mmAq | × | | × | | × | | Δ | | Δ | |
| 150mmAq | o | | o | | o | | o | | o | |
| 200mmAq | o | | o | | o | | o | | o | |
| 500mmAq | Δ | | o | | o | | o | | o | |
| 1000mmAq | o | | o | | o | | o | | o | |

×: water drops flooded.

Δ: water drops were removed when taking time.

o: water drops were swiftly removed.

EXPERIMENTAL EXAMPLE 2

The same separator was prepared as the separator having the smallest equivalent diameter of 0.79 mm (groove width: 0.7 mm, groove depth: 0.7 mm, see Table 3) among the trial separators having exhibited favorable results in EXPERIMENTAL EXAMPLE 1.

Further prepared was the same separator as the separator having the largest equivalent diameter of 1.3 mm (groove width: 1.2 mm, groove depth: 1.1 mm, see Table 6) among the trial separators having exhibited favorable results in EXPERIMENTAL EXAMPLE 1. It should be noted that the separator selected here had the largest equivalent diameter with the groove width being 1.2 mm because it was thought that sufficient cell performance could not be obtained with the groove width over 1.2 mm.

Moreover, the same separator was prepared as the separator having exhibited a favorable result in EXPERIMENTAL EXAMPLE 1 and having the middle equivalent diameter, between the aforesaid smallest and largest equivalent diameters, of 1.13 mm (groove width: 1 mm, groove depth: 1 mm, see Table 5).

Meanwhile, electron conductive carbon paper (manufactured by Toray Industries, Inc.) and carbon cloth, to constitute gas diffusion layers, were prepared. Even with the use of either the carbon paper or the carbon cloth, when the gas diffusion layer had a thickness of not more than 90 μm, it became more difficult to handle the gas diffusion layer in the production process of the fuel cell. Additionally, conductivity of the gas diffusion layer in a direction parallel to the surface thereof was insufficient to cause deterioration of cell characteristics, whereby it was confirmed that the gas diffusion layer preferably had a thickness of not less than 100 μm.

Next, a gasket was provided on the periphery of each trial separator and a gas diffusion layer was then provided on the gas-passage-groove-side surface of the separator. Further, a transparent acrylic plate was placed on the gas diffusion layer so that the flowing state of nitrogen or an air, with oil mist added thereto, along the gas passage grooves could be observed. Subsequently, the acrylic plate was clamped onto the separator in such a manner that pressure of 7 kg/cm$^2$ was applied to the contact portion between the gas diffusion layer and the separator. A gas permeability of the gas diffusion layer varies, depending on clamping pressure, i.e. the higher the clamping pressure, the lower the gas permeability becomes. In the present experimental example, carbon cloth was used which had a gas permeability of $1.2 \times 10^{-7}$ m$^2$/(Pa •sec) when the clamping pressure was 7 kg/cm$^2$.

Nitrogen or air was injected into the gas passage grooves in the obtained separator with the gas diffusion layer disposed thereon. Pressure loss of the gas was then measured. Meanwhile, without using a gas diffusion layer, a transparent acrylic plate was placed on the surface of a separator with a gasket provided on the periphery thereof in the same manner as in EXPERIMENTAL EXAMPLE 1, the gas was injected into the gas passage grooves, and pressure loss of the gas was measured. The gas was injected here at the same flow rate as in the case of the separator with the gas diffusion layer provided thereon. From pressure losses of both cases of using the gas diffusion layer and not using the same, ratios of an amount of the underflow gas flowing in the gas diffusion layer to an amount of the gas flowing along the gas passage grooves of the separator were determined. Further, the underflowing state of the gas was observed. The results are shown in Tables 8 to 10.

Table 8

| Thickness of GDL (μm) | 100 | 200 | 300 | 400 | 450 |
|---|---|---|---|---|---|
| Ratio of gas flow rates(f/e) | 0.10 | 0.18 | 0.31 | 0.50 | 0.76 |
| State of gas underflow | ○ | ○ | ○ | × | × |
| GDL: Gas diffusion layer ×: Gas was in shortcut-underflowing state in GDL from gas | | | | | |
| inlet toward outlet. | | | | | |
| ○: Gas was in uniformly flowing state along flow channels. | | | | | |

Table 9

| Thickness of GDL(μm) | 100 | 200 | 300 | 400 | 450 |
|---|---|---|---|---|---|
| Ratio of gas flow rates(f/e) | 0.07 | 0.15 | 0.29 | 0.46 | 0.70 |
| State of gas underflow | ○ | ○ | ○ | × | × |
| GDL: Gas diffusion layer ×: Gas was in shortcut-underflowing state in GDL from gas inlet toward outlet. ○: Gas was in uniformly flowing state along flow channels. | | | | | |

Table 10

| Thickness of GDL (μm) | 100 | 200 | 300 | 400 | 450 |
|---|---|---|---|---|---|
| Ratio of gas flow rates(f/e) | 0.05 | 0.11 | 0.25 | 0.43 | 0.66 |
| State of gas underflow | ○ | ○ | ○ | ○ | × |

Table 10 (continued)

| |
| --- |
| GDL: Gas diffusion layer |
| ×: Gas was in shortcut-underflowing state in GDL from gas inlet toward outlet. |
| ○: Gas was in uniformly flowing state along flow channels. |

As a result of a test separately conducted using a fuel cell, it was found that the state of the gas flow sharply varied with time when there was underflow (hereinafter referred to as shortcut underflow) of the gas over the ribs between the gas passage grooves, thereby exerting an adverse effect on initial cell characteristics as well as durability of the cell performance.

EXPERIMENTAL EXAMPLE 3

The same separator was prepared as the separator comprising gas passage grooves with an equivalent diameter of 1.13 mm (groove width: 1mm, a groove depth: 1 mm) , as used in EXPERIMENTAL EXAMPLES 1 and 2. Further, a variety of carbon cloths having a thickness of not less than 200 μm was prepared as the gas diffusion layers. Except for using these carbon cloths, ratios of an amount of the underflow gas flowing in the gas diffusion layer to an amount of the gas flowing along the gas passage grooves of the separator were determined in the same manner as in EXPERIMENTAL EXAMPLE 2. The relationship among the obtained ratios, the underflowing states of the gas and the gas permeability of the carbon cloths is shown in Table 11.

Table 11

| Gas permeability of GDL ($m^3/m^2$/sec/Pa •m) | $3 \times 10^{-6}$ | $2 \times 10^{-6}$ | $2 \times 10^{-7}$ | $2 \times 10^{-8}$ | $1 \times 10^{-8}$ |
| --- | --- | --- | --- | --- | --- |
| A ratio of gas flow rates(f/e) | 0.52 | 0.43 | 0.2 | 0.05 | 0.03 |
| State of gas underflow | × | ○ | ○ | ○ | Δ |

| |
| --- |
| GDL: Gas diffusion layer |
| ×: Gas was in shortcut-underflowing state in GDL from gas inlet toward outlet. |
| Δ: Gas was in a little underflowing state in GDL. |
| ○: Gas was in uniformly flowing state along flow channels. |

As a result of a test separately conducted using a fuel cell, it was observed that the state of the gas flow sharply varied with time when there was the shortcut underflow of the gas from the inlet to the outlet of the gas passage grooves in the gas diffusion layer, thereby exerting an adverse effect on initial cell characteristics as well as durability of the cell performance. It was also found that even when there was almost no underflow of the gas in the gas diffusion layer, the cell performance deteriorated.

EXAMPLE 1

(i) Production of electrode

An acetylene black powder (Denka-Black (product name), manufactured by Denki Kagaku Kogyo Co., Ltd.) was made to carry platinum particles with an average mean particle size of about 30 Å to prepare a catalyst powder. An amount of platinum was 25 parts by weight per 100 parts by weight of the acetylene black powder. The obtained catalyst powder was mixed with isopropanol to prepare a dispersion A. Further, perfluorocarbon sulfonic acid (Flemion (product name), manufactured by Asahi Glass Company) was mixed with ethyl alcohol to prepare a dispersion B. The dispersions A and B were then mixed to one another to give a catalyst paste.

In the meantime, carbon cloth to constitute a gas diffusion layer was prepared. Carbon cloth with outer dimensions of 12 cm × 12 cm, a thickness of 200 μm and gas permeability of $1.2 \times 10^{-7}$ $m^2$/(Pa •sec) was used. A mixture of a carbon black powder and an aqueous dispersion of polytetrafluoroethylene (PTFE) (D-1 (product name), manufactured by DAIKIN INDUSTRIES, LTD.) was applied onto the side surface to form a catalyst reaction layer of this carbon cloth, which was then baked at 400°C for 30 minutes to provide a water-repellent layer on the carbon cloth. The aforesaid catalyst paste was applied onto this water-repellent layer by screen printing to form a catalyst reaction layer. In such a manner, an electrode comprising the carbon cloth and the catalyst reaction layer formed on the carbon cloth with the water-repellent layer provided therebetween was obtained. Contents of platinum and perfluorocarbon sulfonic acid per area in the electrode were 0.3 mg/$cm^2$ and 1.0 mg/$cm^2$, respectively.

(ii) Production of MEA

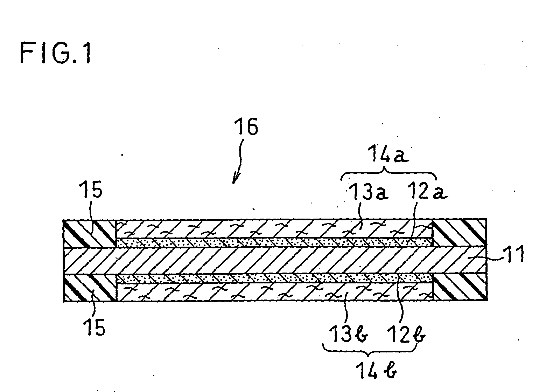

A description is made with reference to FIG. 1.

Each of a pair of electrodes 14 (cathode 14a and anode 14b) , comprising a catalyst reaction layer 12 and a gas diffusion layer 13, was bonded by hot press onto each surface of a hydrogen ion conductive polymer electrolyte membrane 11 having outer dimensions of 20 cm $\times$ 20 cm in such a manner that the catalyst reaction layer 12 was in contact with the electrolyte membrane 11. For the hydrogen ion conductive polymer electrolyte membrane 11 perfluorocarbon sulfonic acid was used having been formed into a thin film with a thickness of 30 $\mu$m. Next, manifold apertures in the same sizes and placements as those formed in a later-described separator were formed on the periphery of the electrolyte membrane 11. A gas sealing member 15 manufactured by Viton Co. was provided on the periphery of the electrolyte membrane such that the electrodes and the manifold apertures were encircled by the gas sealing member to give a membrane-electrode assembly (MEA) 16.

(iii) Production of conductive separator

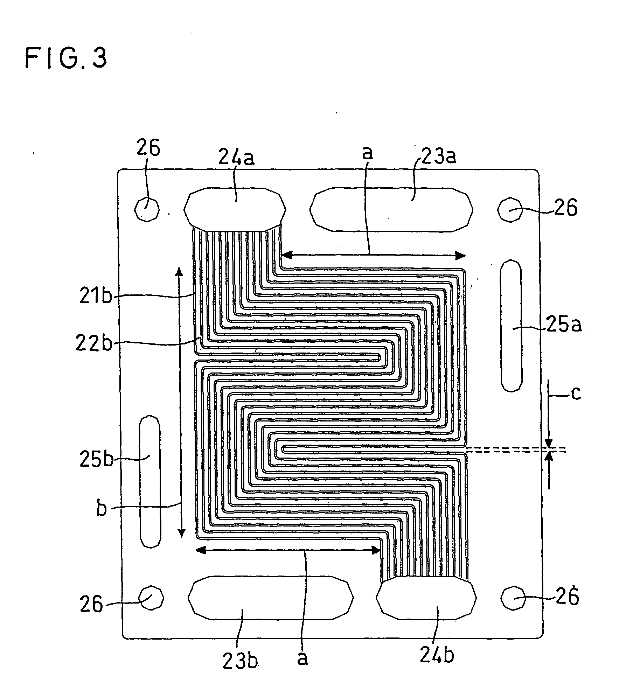

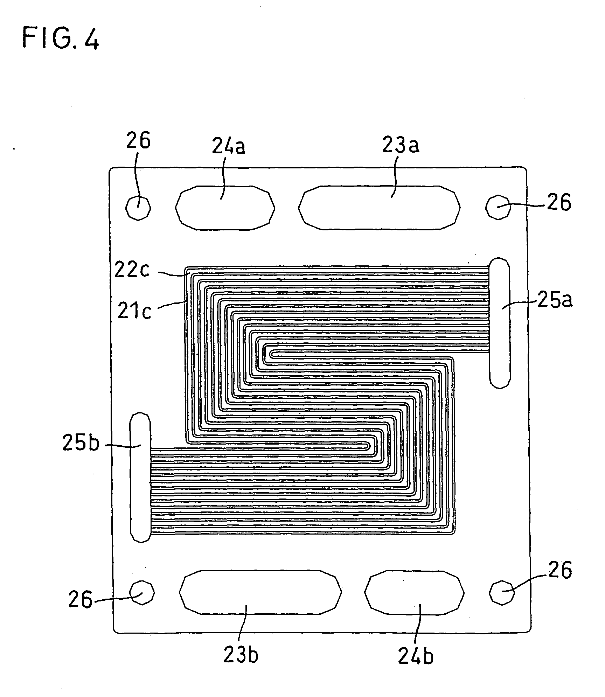

A surface of a dense carbon plate having no gas permeability was cut to form gas passage grooves, thereby to produce a conductive separator. Herein produced were three sorts of separators: a separator (X) with the grooves as shown in FIG. 2 formed on one surface and the 'grooves as shown in FIG. 3 formed on the other surface; a separator (Y) with the grooves as shown in FIG. 2 formed on one surface and the grooves as shown in FIG. 4 formed on the other surface; and a separator (Z) with the grooves as shown in FIG. 3 formed on one surface and the grooves as shown in FIG. 4 formed on the other surface (the placements of the manifold apertures were different). The grooves shown in FIGS. 2, 3 and 4 were oxidant gas passage grooves, fuel gas passage grooves and cooling water passage grooves, respectively.

Each separator had dimensions of 20 cm x 20 cm and a thickness of 3 mm. Each of the grooves 21a and 21b with a rectangular concave-shaped cross section, formed in each separator, had a width of 0.7 mm, a depth of 0.7 mm and an equivalent diameter of 0.79 mm per each groove. The gas passage grooves traveled in a serpentine line extending from the upstream toward the downstream and comprised a plurality of horizontal parts which were mutually parallel and substantially had the same length "a", and the ratio of the length "a" to the shortest linear dimension "b" between the most-upstream-side horizontal part and the most-downstream horizontal part: a/b was 1.2. Further, ribs 22a and 22b between the mutually adjacent horizontal parts had a width "c" of 1.2 mm and the ratio of the rib width "c" to the length "a": c/a was 1/30.

In each separator prescribed manifold apertures were subsequently formed, namely an oxidant gas inlet 23a, an oxidant gas outlet 23b, a fuel gas inlet 24a, a fuel gas outlet 24b, a cooling water inlet 25a and a cooling water outlet 25b. It should be noted that the respective manifold apertures of the same sizes were formed in the same positions of each separator. Further, clamping rod apertures 26 were formed at the four corners of each separator.

(iv) Production of fuel cell

The MEA was interposed between the aforesaid two prescribed separators to serve as a unit cell. One of the surfaces of the MEA was made to face the oxidant gas passage grooves in the separator (X), while the other was made to face the fuel gas passage grooves in the separator (Z). Another MEA was provided so as to face the fuel gas passage grooves in the separator (X) of the unit cell, while the opposite surface thereof was made to face the oxidant gas passage grooves in the separator (Y). The pattern of such a two-cell structure was repeated to assemble a stack of 100 cells. On each end of the cell stack, a copper-made current collecting plate with the surface thereof gold-plated, an insulating plate made of PPS (polyphenylene sulfide) and an end plate made of stainless steel were successively placed, and the end plates were secured with clamping rods. Clamping pressure was 10 kgf/cm$^2$ relative to the electrode.

(v) Evaluation of fuel cell

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristic. It was confirmed as a result that the output power of the fuel cell of the present example was kept at 3.11 kW (72 V - 43.2 A) 8000 hours later.

EXAMPLE 2

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 1 mm and an equivalent diameter of 1.13 mm per each groove.
The ratio of the length "a" of the horizontal parts to the shortest linear dimension "b" between the most-upstream-side horizontal part and the most-downstream horizontal part: a/b and the ratio of the rib width "c" to the length "a": c/a were the same as in EXAMPLE 1, respectively.
The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 97.5 V at the time of no load when no current was output to the outside.
This fuel cell was subjected to continuous power generation under conditions of a fuel utilization rate of 75%, an oxygen utilization rate of 50% and a current density of 0.3 A/cm$^2$, to measure variations with time in output power performance. It was confirmed as a result that the output power of the fuel cell of the present example was kept at 3.132 kW (72.5 V - 43.2 A) 8000 hours later.

EXAMPLE 3

The same fuel cell as in EXAMPLE 1 was produced except that the structures of the grooves in the separator were varied. The separator used here comprised grooves 21a and 21b with the same structures as in EXAMPLE 1 except that the grooves had a width of 1.2 mm, a depth of 1.1 mm and an equivalent diameter of 1.3 mm per each groove.
The ratio of the length "a" of the horizontal parts to the shortest linear dimension "b" between the most-upstream-side horizontal part and the most-downstream horizontal part: a/b and the ratio of the rib width "c" to the length "a": c/a were the same as in EXAMPLE 1, respectively.
The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.
This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.123 kW (72.3 V - 43.2 A) 8000 hours later.

EXAMPLE 4

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 1 mm and an equivalent diameter of 1.13 mm per each groove, and each of the ribs 22a and 22b between the mutually adjacent horizontal parts had a width "c" of 1 mm, and the ratio of the rib width "c" to the length "a" of the horizontal parts: c/a was 1/60.
The ratio a/b of the length "a" to the shortest linear dimension "b" between the most-upstream-side horizontal part and the most-downstream horizontal part was the same as in EXAMPLE 1.
The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.
This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.132 kW (72.5 V - 43.2 A) 8000 hours later.

EXAMPLE 5

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 1 mm and an equivalent diameter of 1.13 mm per each groove, and each of the ribs 22a and 22b between the mutually adjacent horizontal parts had a width "c" of 0.8 mm, and the ratio of the rib width "c" to the length "a" of the horizontal parts: c/a was 1/200.

The ratio of the length "a" to the shortest linear dimension "b" between the most-upstream-side horizontal part and the most-downstream horizontal part: a/b was the same as in EXAMPLE 1.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.123 kW (72.3 V - 43.2 A) 8000 hours later.

EXAMPLE 6

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 1 mm and an equivalent diameter of 1.13 mm per each groove, the ratio of the length "a" of the horizontal parts to the shortest linear dimension "b" between the most-upstream-side horizontal part and the most-downstream horizontal part: a/b was 0.8, each of the ribs 22a and 22b between the mutually adjacent horizontal parts had a width "c" of 1 mm, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 99 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.154 kW (73 V - 43.2 A) 8000 hours later.

EXAMPLE 7

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 1 mm and an equivalent diameter of 1.13 mm per each groove, the ratio of the length "a" of the horizontal parts to the shortest linear dimension "b" between the most-upstream-side horizontal part and the most-downstream horizontal part: a/b was 0.6, each of the ribs 22a and 22b between the mutually adjacent horizontal parts had a width "c" of 1 mm, and the ratio of the rib width "c" to the length "a": c/a was 1/40.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.11 kW (72 V - 43.2 A) 8000 hours later.

COMPARATIVE EXAMPLE 1

The same fuel cell as in EXAMPLE 1 was produced except that the structures of the grooves in the separator were varied. The separator used here comprised grooves 21a and 21b with the same structures as in EXAMPLE 1 except that the grooves had a width of 0.6 mm, a depth of 0.6 mm and an equivalent diameter of 0.68 mm per each groove, the ratio of the length "a" of the horizontal parts to the shortest linear dimension "b" between the most-upstream-side horizontal part and the most-downstream horizontal part: a/b was 1.3, each of the ribs 22a and 22b between the mutually adjacent horizontal parts had a width "c" of 0.5 mm, and the ratio of the rib width "c" to the length "a": c/a was 1/220.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 96 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. As a result of operation of the fuel cell of the present example over 2000 hours, it was confirmed that the output in the initial stage of 3.07 kW (71 V - 43.2 A) decreased to 2.85 kW (66 V - 43.2 A) 2000 hours later.

COMPARATIVE EXAMPLE 2

The same fuel cell as in EXAMPLE 1 was produced except that the structures of the grooves in the separator were varied. The separator used here comprised grooves 21a and 21b with the same structures as in EXAMPLE 1 except that the grooves had a width of 1.2 mm, a depth of 1.2 mm and an equivalent diameter of 1.35 mm per each groove, the ratio of the length "a" of the horizontal parts to the shortest linear dimension "b" between the most-upstream-side horizontal part and the most-downstream horizontal part: a/b was 1.3, each of the ribs 22a and 22b between the mutually adjacent horizontal parts had a width "c" of 1.5 mm, and the ratio of the rib width "c" to the length "a": c/a was 1/19.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 96 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. As a result of operation of the fuel cell of the present example over 2000 hours, it was confirmed that the output in the initial stage of 3.02 kW (70 V - 43.2 A) decreased to 2.76 kW (64 V - 43.2 A) 2000 hours later.

EXAMPLE 8

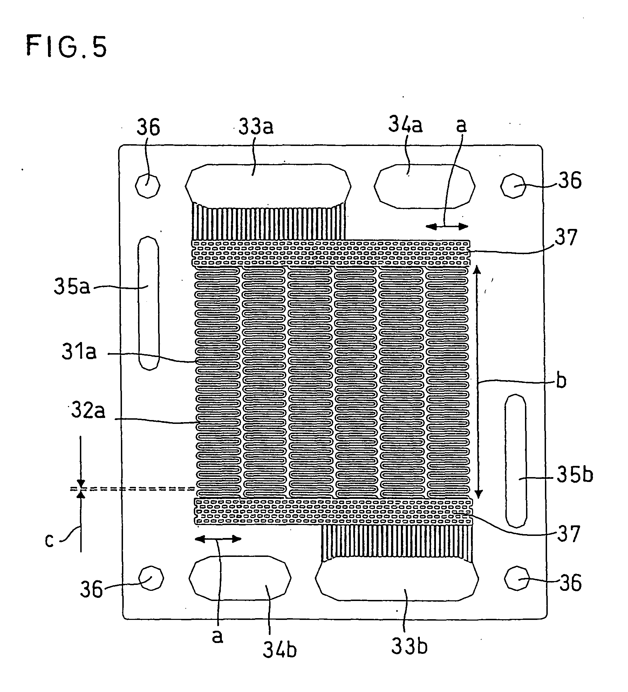

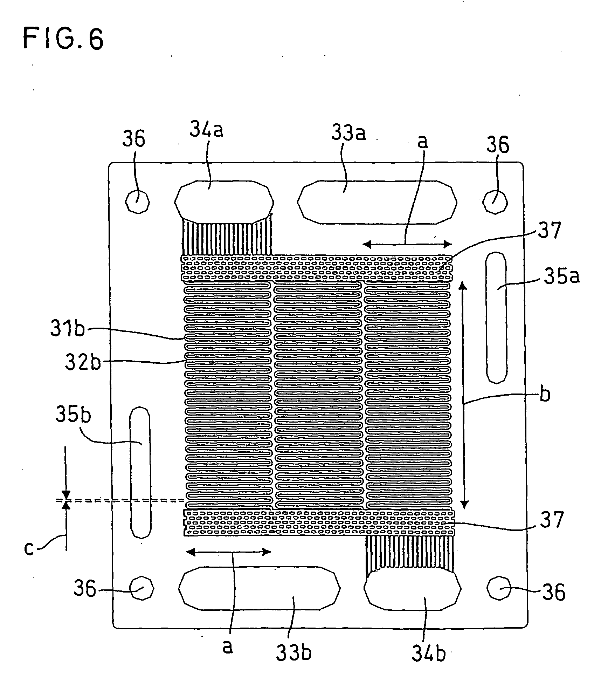

The same fuel cell was produced as in EXAMPLE 1 except that the separator was varied. As in EXAMPLE 1, a surface of a dense carbon plate having no gas permeability was cut to form gas passage grooves, thereby to produce a conductive separator. Herein produced were three sorts of separators: a separator (○) with the grooves as shown in FIG. 5 formed on one surface and the grooves as shown in FIG. 6 formed on the other surface; a separator (P) with the grooves as shown in FIG. 5 formed on one surface and the grooves as shown in FIG. 4 formed on the other surface; and a separator (Q) with the grooves as shown in FIG. 6 formed on one surface and the grooves as shown in FIG. 4 formed on the other surface (the placements of the manifold apertures were different). The grooves shown in FIGS. 5 and 6 were oxidant gas passage grooves and fuel gas passage grooves, respectively. The grooves shown in FIG. 4 were cooling water passage grooves, as in EXAMPLE 1.

As in EXAMPLE 1, each separator had dimensions of 20 cm x 20 cm and a thickness of 3 mm. Each of the grooves 31a and 31b with a rectangular concave-shaped cross section, formed in each separator, had a width of 0.7 mm, a depth of 0.7 mm and an equivalent diameter of 0.79 mm per each groove. The gas passage grooves traveled in a serpentine line extending from the upstream toward the downstream and comprised a plurality of horizontal parts which were mutually parallel and substantially had the same length "a", and the ratio of the length "a" to the shortest linear dimension "b" between the most-upstream-side horizontal part and the most-downstream horizontal part: a/b was 0.2. Further, each of ribs 32a and 32b between the mutually adjacent horizontal parts had a width "c" of 0.7 mm, and the ratio of the rib width "c" to the length "a": c/a was 1/30. It is to be noted that matrix-shaped flow channels 37 were provided between the most-upstream horizontal part and the manifold apertures, and between the most-downstream horizontal part and the manifold apertures.

In each separator prescribed manifold apertures were subsequently formed, namely an oxidant gas inlet 33a, an oxidant gas outlet 33b, a fuel gas inlet 34a, a fuel gas outlet 34b, a cooling water inlet 35a and a cooling water outlet 35b. It should be noted that the respective manifold apertures of the same sizes were formed in the same positions of each separator. Further, clamping rod apertures 36 were formed at the four corners of each separator.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.11 kW (72 V - 43.2 A) 8000 hours later.

EXAMPLE 9

The same fuel cell as in EXAMPLE 8 was produced except that the structures of the grooves in the separator were varied. The separator used here comprised grooves with the same structure as in EXAMPLE 8 except that each of the grooves 31a and 31b had a width of 1 mm, a depth of 1 mm and an equivalent diameter of 1.13 mm per each groove, each of the ribs 32a and 32b had a width "c" of 1 mm, and the ratio of the rib width "c" to the length "a": c/a was 1/20.

The ratio of the length "a" of the horizontal parts to the shortest linear dimension "b" between the most-upstream-side horizontal part and the most-downstream horizontal part: a/b was the same as in EXAMPLE 8.

The polymer electrolyte fuel cell of the present example as thus produced was kept at 70°C, and a hydrogen gas humidified and heated to have a dew point. of 70°C and an air humidified and heated to have a dew point of 70°C were supplied to the anode side and the cathode side, respectively. This resulted in a cell open-circuit voltage of 98 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.119 kW (72.2 V - 43.2 A) 8000 hours later.

EXAMPLE 10

The same fuel cell as in EXAMPLE 8 was produced except that the structures of the grooves in the separator were varied. The separator used here comprised grooves with the same structure as in EXAMPLE 8 except that each of the grooves 31a and 31b had a width of 1.2 mm, a depth of 1.1 mm and an equivalent diameter of 1.3 mm per each groove, each of the ribs 32a and 32b had a width "c" of 1 mm, and the ratio of the rib width "c" to the length "a": c/a was 1/20.

The ratio of the length "a" of the horizontal parts to the shortest linear dimension "b" between the most-upstream-side horizontal part and the most-downstream horizontal part: a/b was the same as in EXAMPLE 8.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.136 kW (72.6 V - 43.2 A) 8000 hours later.

EXAMPLE 11

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 0.79 mm and an equivalent diameter of 1 mm per each groove.

The ratio of the length "a" of the horizontal parts to the shortest linear dimension "b" between the most-upstream-side horizontal part and the most-downstream horizontal part: a/b was 1, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristic. It was confirmed as a result that the output of the fuel cell of the present example was kept at 3.162 kW (73.2 V - 43.2 A) 8000 hours later.

EXAMPLE 12

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 0.88 mm and an equivalent diameter of 1.06 mm per each groove.

The ratio of the length "a" of the horizontal parts to the shortest linear dimension "b" between the most-upstream-side horizontal part and the most-downstream horizontal part: a/b was 1, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 99.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.184 kW (73.7 V - 43.2 A) 8000 hours later.

EXAMPLE 13

The same fuel cell as in EXAMPLE 1 was produced except that the structures of the grooves in the separator were varied. The separator used here comprised grooves 21a and 21b with the same structures as in EXAMPLE 1 except that the grooves had a width of 1.1 mm, a depth of 1.03 mm and an equivalent diameter of 1.2 mm per each groove.

The ratio of the length "a" of the horizontal parts to the shortest linear dimension "b" between the most-upstream-side horizontal part and the most-downstream horizontal part: a/b was 1, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 99 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.171 kW (73.4 V - 43.2 A) 8000 hours later.

EXAMPLE 14

The same fuel cell as in EXAMPLE 1 was produced except that the structures of the grooves in the separator were varied. The separator used here comprised grooves 21a and 21b with the same structures as in EXAMPLE 1 except that the grooves had a width of 1 mm, a depth of 0.75 mm and an equivalent diameter of 0.98 mm per each groove.

The ratio of the length "a" of the horizontal parts to the shortest linear dimension "b" between the most-upstream-side horizontal part and the most-downstream horizontal part: a/b was 1, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.119 kW (72.2 V - 43.2 A) 8000 hours later.

EXAMPLE 15

The same fuel cell as in EXAMPLE 1 was produced except that the structures of the grooves in the separator were varied. The separator used here comprised grooves 21a and 21b with the same structures as in EXAMPLE 1 except that the grooves had a width of 1.1 mm, a depth of 1.06 mm and an equivalent diameter of 1.22 mm per each groove.

The ratio of the length "a" of the horizontal parts to the shortest linear dimension "b" between the most-upstream-side horizontal part and the most-downstream horizontal part: a/b was 1, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98.5 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.128 kW (72.4 V - 43.2 A) 8000 hours later.

EXAMPLE 16

The same fuel cell as in EXAMPLE 1 was produced except that the structures of the grooves in the separator were varied. The separator used here comprised grooves 21a and 21b with the same structures as in EXAMPLE 1 except that the grooves had a width of 0.7 mm, a depth of 0.81 mm and an equivalent diameter of 0.85 mm per each groove.

The ratio of the length "a" of the horizontal parts to the shortest linear dimension "b" between the most-upstream-side horizontal part and the most-downstream horizontal part: a/b was 1, and the ratio of the rib width "c" to the length "a": c/a was 1/50.

The polymer electrolyte fuel cell of the present example as thus produced was kept at 70°C, and a hydrogen gas humidified and heated to have a dew point of 70°C and an air humidified and heated to have a dew point of 70°C were supplied to the anode side and the cathode side, respectively. This resulted in a cell open-circuit voltage of 98 V at the time of no load when no current was output to the outside.

This fuel cell was subjected to continuous power generation under conditions of a fuel utilization rate of 75%, an oxygen utilization rate of 50% and a current density of 0.3 A/cm$^2$, to measure variations with time in output characteristics. It was confirmed as a result that the output of the fuel cell of the present example was kept at 3.123 kW (72.3 V - 43.2 A) 8000 hours later.

EXPERIMENTAL EXAMPLE 4

As a result of the visual observation performed in EXPERIMENTAL EXAMPLE 1 as to whether or not swift removal of the water drops from the separator flow channels was possible, the water drops could not be removed swiftly when the groove depth was 0.5 mm, the groove widths were 0.5 mm, 0.7 mm and 1 mm, and a the gas pressure loss was in the range of 1 kPa (100 mmAq) to 10 kPa (1000 mmAq), as shown in FIG. 1.

Thereon, the same operation was performed as in EXPERIMENTAL EXAMPLE 1, except that the aforesaid separators were used and the gas with pressure loss exceeding 10 kPa was injected into the gas passage grooves, to confirm by visual observation whether or not swift removal 'of water drops from the separator passage grooves was possible. The results are shown in Table 12.

Table 12

| Equivalent Diameter (mm) | 0.56 | | 0.67 | | 0.80 | |
|---|---|---|---|---|---|---|
| Width/depth (mm) | Width 0.5 | Depth 0.5 | Width 0.7 | Depth 0.5 | Width 1.0 | Depth 0.5 |
| 1500mmAq | × | | × | | ○ | |
| 2000mmAq | × | | △ | | ○ | |
| 2500mmAq | △ | | ○ | | ○ | |
| 2700mmAq | ○ | | ○ | | ○ | |
| 3000mmAq | ○ | | ○ | | ○ | |

×: water drops flooded.

△: water drops were removed when taking time.

○: water drops were swiftly removed.

It was confirmed from the above results that when pressure loss of not less than 25 kPa was applied, the water drops could be removed swiftly from the separator flow channels, regardless of the equivalent diameter, width and depth of the gas flow channel grooves. Accordingly, it was revealed that the effect of the present invention could be effectively exerted when the pressure loss was in the range of not less than 1.5 kPa (150 mmAq) and not more than 25 kPa (2500 mmAq).

EXAMPLE 17

A fuel cell identical with the one in EXAMPLE 1 was produced and a temperature of the cooling water inlet thereof was kept at 40 to 80 °C. A mixed gas comprising 23% of carbon dioxide, 76.5% f hydrogen, 0.5% of an air and 20 ppm of carbon monoxide, humidified and heated to have the same dew point as the temperature of the cooling water inlet, was supplied to the anode side. An air humidified and heated to have the same dew point as the temperature of the cooling water inlet was supplied to the cathode side.

This fuel cell was subjected to continuous power generation under conditions of a fuel utilization rate of 75%, an oxygen utilization rate of 50% and a current density of 0.3 A/cm$^2$, to measure variations with time in output characteristics. Further, a flow rate of the cooling water was controlled during the continuous power generation under condition of a current density of 0.3 A/cm$^2$ such that a temperature of the cooling water outlet was 6°C higher than that of the cooling water inlet.

Tables 13 shows: the cell open-circuit voltage at the time of no load when no current was output to the outside;

the standard deviation (σ) of variations in voltage of 100 unit cells 100 hours after the start of the continuous power generation; and the average speed of voltage decreases (deterioration rate) per hour 10000 hours after the start of the continuous power generation.

Table 13

| Cooling water inlet temp. (°C) | Cell open-circuit voltage (V) | Voltage standard deviation (σ) | Average speed of voltage decrease (μV/h) |
|---|---|---|---|
| 40 | 94 | 3.8 | 8.1 |
| 45 | 96 | 2.3 | 3.3 |
| 50 | 97 | 2.1 | 2.8 |
| 55 | 98 | 1.9 | 2.0 |
| 60 | 98 | 1.8 | 1.7 |
| 65 | 98 | 1.7 | 1.8 |
| 70 | 98 | 1.7 | 2.1 |
| 75 | 98 | 1.6 | 3.5 |
| 80 | 98 | 1.6 | Impossible to operate 8000 hours later |

It was found from Table 13 that, while the cell open-circuit voltage was not greatly affected by the temperature of the cooling water inlet (cell temperature), when the temperature of the cooling water inlet was not higher than 40°C, an electrode catalyst was poisoned with carbon monoxide in the fuel gas, to increase the deterioration rate as well as the σ value of the initial characteristic. It was also found that when the temperature of the cooling water inlet was not lower than 80°C, the cell voltage decreased to make the cell impossible to operate about 8000 hours later. It can thus be said that the temperature of the cooling water inlet was suitably from 45 to 75°C, and more desirably from 50 to 70 °C.

EXAMPLE 18

A fuel cell identical with the one in EXAMPLE 1 was produced and a temperature of the cooling water inlet was kept at 65□. A mixed gas comprising 23% of carbon dioxide, 76.5% of hydrogen, 0.5% of an air and 20 ppm of carbon monoxide, humidified and heated to have a dew point of -10 to +10°C relative to the temperature of the cooling water inlet, was supplied to the anode side. An air humidified and heated to have a dew point of -10 to +10 °C relative to the temperature of the cooling water inlet was supplied to the cathode side.

This fuel cell was subjected to continuous power generation under conditions of a fuel utilization rate of 75%, an oxygen utilization rate of 50% and a current density of 0.3 A/cm$^2$, to measure variations with time in output characteristic. Further, a flow rate of the cooling water was controlled during the continuous power generation under condition of a current density of 0.3 A/cm$^2$ such that a temperature of a cooling water outlet was 6°C higher than that of the cooling water inlet.

Tables 14 shows: the cell open-circuit voltage at the time of no load when no current was output to the outside; the standard deviation (σ) of variations in voltage of 100 unit cells 100 hours after the start of the continuous power generation; and the average speed of voltage decreases (deterioration rate) per hour 10000 hours after the start of the continuous power generation.

Table 14

| Dew point of supplied gas water inlet temp. (°C) | Cell open-circuit voltage (V) | Voltage standard deviation (σ) | Average speed of voltage decrease (μV/h) |
|---|---|---|---|
| - 10 | 93 | 2.1 | Impossible to operate 7000 hours later |
| - 5 | 96 | 1.8 | 4.3 |
| 0 | 98 | 1.7 | 1.8 |
| +5 | 98 | 2.3 | 2.0 |

Table 14   (continued)

| Dew point of supplied gas water inlet temp. (°C) | Cell open-circuit voltage (V) | Voltage standard deviation (σ) | Average speed of voltage decrease (µV/h) |
|---|---|---|---|
| +10 | 98 | 4.5 | 6.5 |

It was found from Table 14 that, while the cell open-circuit voltage was not largely affected by a dew point of the supplied gas, when the dew point of the supplied gas was 10°C higher than the temperature of the cooling water inlet, the σ value of the initial characteristic increased under the influence of condensed water clogging in the gas flow channels. It was also found that when the dew point of the supplied gas was 10°C lower than the temperature of the cooling water inlet, the cell voltage decreased to make the cell impossible to operate about 7000 hours later. As described above, it can thus be said that the appropriate dew point of the supplied gas relative to the temperature of the cooling water inlet was in the range of -5 to +5 °C.

EXAMPLE 19

A fuel cell identical with the one in EXAMPLE 1 was produced and a temperature of the cooling water inlet was kept at 65 °C. A mixed gas comprising 23% of carbon dioxide, 76.5% of hydrogen, 0.5% of an air and 20 ppm of carbon monoxide, humidified and heated to have the same dew point as the temperature of the cooling water inlet, was supplied to the anode side. An air humidified and heated to have the same dew point as the temperature of the cooling water inlet was supplied to the cathode side.

This fuel cell was subjected to continuous power generation under conditions of a fuel utilization rate of 75%, an oxygen utilization rate of 20 to 80 % and a current density of 0.3 A/cm$^2$, to measure variations with time in output characteristics. Further, a flow rate of the cooling water was controlled during the continuous power generation under condition of a current density of 0.3 A/cm$^2$ such that a temperature of a cooling water outlet was 7°C higher than that of the cooling water inlet.

Tables 15 shows: the cell open-circuit voltage at the time of no load when no current was output to the outside; the standard deviation (σ) of variations in voltage of 100 unit cells 100 hours after the start of the continuous power generation; and the average speed of voltage decreases (deterioration rate) per hour 10000 hours after the start of the continuous power generation.

Table 15

| Oxygen utilization rate (%) | Cell open-Circuit voltage (V) | Voltage standard deviation (σ) | Average speed of voltage decrease (µV/h) |
|---|---|---|---|
| 20 | 99 | 1.5 | Impossible to operate 9000 hours later |
| 30 | 98 | 1.5 | 4.3 |
| 40 | 98 | 1.6 | 1.8 |
| 50 | 98 | 1.7 | 1.8 |
| 60 | 98 | 1.8 | 1.6 |
| 70 | 97 | 2.1 | 1.5 |
| 80 | 96 | 5.3 | 7.8 |

It was found from Table 15 that, while the cell open-circuit voltage was not greatly affected by the oxygen utilization rate, when the oxygen utilization was 80%, the σ value of the initial characteristic increased under the influence of the condensed water clogging in the gas flow channels. It was also found that, when the oxygen utilization rate was 20%, the cell voltage decreased to make the cell impossible to operate about 9000 hours later. It can thus be said that the appropriate oxygen utilization rate was in the range of 30 to 70 %.

EXAMPLE 20

A fuel cell identical with the one in EXAMPLE 1 was produced and a temperature of the cooling water inlet was kept at 65 °C. A mixed gas comprising 23% of carbon dioxide, 76.5% of hydrogen, 0.5% of an air and 20 ppm of carbon monoxide, humidified and heated to have the same dew point as the temperature of the cooling water inlet, was supplied to the anode side. An air humidified and heated to have the same dew point as the temperature of the cooling water inlet was supplied to the cathode side.

This fuel cell was subjected to continuous power generation under conditions of a fuel utilization rate of 75%, an oxygen utilization rate of 50 % and a current density of 0.02 to 0.5 A/cm$^2$, to measure variations with time in output characteristic. Further, a flow rate of the cooling water was controlled during the continuous power generation under condition of a current density of not lower than 0.1 A/cm$^2$ such that a temperature of the cooling water outlet was 6°C higher than that of the cooling water inlet. Under the condition of a current density of lower than 0.1 A/cm$^2$, the cell was performed with the same flow rate of the cooling water as in the case of a current density of 0.1 A/cm$^2$.

Tables 16 shows: the cell open-circuit voltage at the time of no load when no current was output to the outside; the standard deviation ($\sigma$) of variations in voltage of 100 unit cells 100 hours after the start of the continuous power generation; and the average speed of voltage decreases (deterioration rate) per hour 10000 hours after the start of the continuous power generation.

Table 16

| Current density (A/cm$^2$) | Cell open-circuit voltage (V) | Voltage standard deviation ($\sigma$) | Average speed of voltage decrease (µV/h) |
|---|---|---|---|
| 0.02 | 90 | 5.3 | 6.3 |
| 0.05 | 93 | 2.2 | 3.3 |
| 0.1 | 94 | 1.5 | 2.1 |
| 0.2 | 96 | 1.6 | 1.8 |
| 0.3 | 96 | 1.7 | 1.8 |
| 0.4 | 95 | 2.1 | 2.8 |
| 0.5 | 94 | 2.3 | 3.1 |

It was found from Table 16 that, while the cell open-circuit voltage was not largely affected by the current density, when the current density was 0.02 A/cm$^2$, the $\sigma$ value of the initial characteristic increased under the influence of the decreasing flow rate of the gas flowing along the gas flow channels. It was also found that when the current density was 0.02 A/cm$^2$, the deterioration rate increased. It can thus be said that the appropriate current density was in the range of 0.05 A/cm$^2$ or higher.

Meanwhile, a power generation voltage of each unit cell in a fuel cell needs to be kept at not lower than 0.7 V so that a power generation efficiency of the fuel cell stack can be kept high. This requires a current density of not higher than 0.3 A/cm$^2$.

As described above, according to the present invention, a fuel cell with excellent performance and high durability can be accomplished while preventing the flooding phenomenon due to condensed water.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

**Claims**

1. A fuel cell, comprising

    an anode (14b) and a cathode (14a),

    an anode-side separator with at least one fuel gas passage groove (21b), facing said anode (14b), for supplying a fuel gas to said anode (14b), and

    a cathode-side separator with at least one oxidant gas passage groove (21a), facing said cathode (14a), for supplying an oxidant gas to said cathode (14a),

**characterized in that**

said fuel gas passage groove (21b) and/or said oxidant gas passage groove (21a) has/have an equivalent diameter of

not less than 0.56 mm, preferably not less than 0.67 mm and

not more than 1.51 mm.

2. The fuel cell according to claim 1, **characterized in that** said fuel gas passage groove (21b) and/or said oxidant gas passage groove (21a) has/have an equivalent diameter of 0.79 mm to 1.3 mm, preferably 1 mm to 1.2 mm.

3. The fuel cell according to claim 1 or 2,
**characterized in that**
said fuel gas passage groove (21b) and/or said oxidant gas passage groove (21a) has/have a depth of not more than 1.2 mm, and not less than 0.5 mm.

4. The fuel cell according to claim 3, **characterized in that** said fuel gas passage groove (21b) and/or said oxidant gas passage groove (21a) has/have a depth of 0.7 mm to 1.1 mm.

5. The fuel cell according to any preceding claim,
**characterized in that**
said fuel gas passage groove (21b) and/or said oxidant gas passage groove (21a) travel(s) in a serpentine line extending from the upstream toward the downstream, and comprise(s) a plurality of horizontal parts which are mutually parallel and substantially have the same length "a", and a ratio of said length "a" to the shortest linear dimension "b", between the most-upstream-side horizontal part among said plurality of horizontal parts and the most-downstream horizontal part among the same, satisfies $a/b \leq 1.2$, preferably $0.3 \leq a/b \leq 1.2$.

6. The fuel cell according to any preceding claim,
**characterized in that**
said fuel gas passage groove (21b) and/or said oxidant gas passage groove (21a) travel(s) in a serpentine line extending from the upstream toward the downstream, and comprise(s) a plurality of horizontal parts which are mutually parallel and substantially have the same length "a", and a ratio of a width "c" of ribs between said mutually adjacent horizontal parts to said length "a" satisfies $1/200 \leq c/a \leq 1/20$.

7. The fuel cell according to any preceding claim,
**characterized in that**
said anode (14b) and/or said cathode (14a) comprise(s) a gas diffusion layer (13b, 13a) having a thickness of 100 to 400 $\mu$m.

8. The fuel cell according to any preceding claim,
**characterized in that**
said anode (14b) and/or said cathode (14a) comprise(s) a gas diffusion layer (13b, 13a) having a gas permeability in a direction parallel to the major surface thereof, on the basis of a dry gas, of $2 \cdot 10^{-8}$ to $2 \cdot 10^{-6}$ m$^2$/(Pa $\cdot$ sec).

9. The fuel cell according to any preceding claim,
**characterized in that**
said fuel gas passage groove (21b) and/or said oxidant gas passage groove (21a) has/have a width of less than 1.5 mm and of 0.3 mm or more, preferably 0.5 mm or more.

10. A stack of at least 2 fuel cells according to any preceding claim.

11. A method for operating a fuel cell, said fuel cell comprising

an anode (14b) and a cathode (14a),

an anode-side separator with at least one fuel gas passage groove (21b), facing said anode (14b), for supplying a fuel gas to said anode (14b), and

a cathode-side separator with at least one oxidant gas passage groove (21a), facing said cathode (14a), for supplying an oxidant gas to said cathode (14a),

particularly for operating a fuel cell or a fuel cell stack according to any of claims 1 to 10,
**characterized in that**
at least one of a fuel gas flowing along said fuel gas passage groove (21b) and an oxidant gas flowing along said oxidant gas passage groove (21a) has a pressure loss of not smaller than 1.5 kPa and not larger than 25 kPa.

12. The method according to claim 11,
**characterized in that**
a ratio of a flow rate "f" of an underflow gas flowing in said anode (14b) to a flow rate "e" of a fuel gas flowing along said fuel gas passage groove (21b) satisfies $0.05 \leq f/e \leq 0.43$.

13. The method according to claims 11 or 12,
**characterized in that**
a ratio of a flow rate "h" of an underflow gas flowing in said cathode (14a) to a flow rate "g" of an oxidant gas flowing along said oxidant gas passage groove (21a) satisfies $0.05 \leq h/g \leq 0.43$.

14. The method according to any of claims 11 to 13,
**characterized in that**
    said method comprises at least one of the following features:

    a) the fuel cell is provided with at least one cooling medium passage groove (21c), wherein a temperature of the inlet of a cooling medium is 45 to 75° C, preferably 50 to 70° C,

    b) a utilization rate of the oxidant gas is not lower than 30% and not higher than 70%, and

    c) a power generation current density of said fuel cell is not lower than 0.05 A/cm$^2$ and not higher than 0.3 A/cm$^2$.

15. The method according to claim 14, **characterized in that** a dew point of at least one of the fuel gas and oxidant gas to be supplied to said fuel cell is not lower than - 5° C and not higher than + 5° C relative to said inlet temperature.

# FIG.1

FIG. 2

## FIG.3

FIG. 4

FIG.5

# FIG.6